# EUROPEAN PATENT APPLICATION

(11) **EP 1 278 115 A1**
(43) Date of publication of application: **22.01.2003**
(21) Application number: 01953006.2
(22) Date of filing: 31.01.2001
(51) Int. Cl.: G06F 3/00, G06F 13/00

(54) **REPRESENTATION DATA CONTROL SYSTEM, AND REPRESENTATION DATA CONTROL DEVICE CONSTITUTING IT, AND RECORDING MEDIUM RECORDING ITS PROGRAM**

(30) Priority: 18.02.2000 JP 2000041917
(71) Applicant: Sharp Kabushiki Kaisha, Osaka-shi, Osaka 545-8522 (JP)
(72) Inventor: NISHIHATA, Minoru, Soraku-gun, Kyoto 619-0223 (JP)
(74) Representative: Müller, Frithjof E., Dipl.-Ing.
(86) International application number: JP0100684
(87) International publication number: WO01061446

(57) **Abstract**

A terminal displays icons (111) representative of actions/conditions of expression data, such as animation, sound, or text, on an icon palette (110). Further, on the terminal's display screen, there is provided a control input area (120) where icons (121) and text (122) are displayed in a mixture, allowing the user to input an icon (121) by selecting it from the icons (111) on the icon palette (110) and to input text (122) from a keyboard or the like. The terminal controls the actions/conditions of a character representing the user displayed in the animation display area (100a) based on input results in accordance with the icon (121) and displays the text (122) positioned immediately after the icon (121) in synchronism with the animated character representing the user. In this manner, an expression data control system is realized which is capable of quickly and correctly controlling various expressions, including subtle differences between them.

## Description

### Technical Field of the Invention

The present invention relates to an expression data control system controlling expression data, such as animation, sound, and text, which is sequentially output, particularly to an expression data control system capable of quickly and correctly controlling various expressions, including small differences between the expressions.

### Technological Background

For example, Tokukaihei 9-81353 (Japanese Laid-open Patent Application 9-81353/1997, published on March 28, 1997) discloses a display device displaying both text and graphics on the screen. The device displays an image in response to associated control character string contained in a text input. For example, the display device displays a smiling face if the text input contains a control character string ":-)" representing a smiling face. This better helps a nuance be displayed than a text-only display.

Meanwhile, in the U.S., Microsoft Corporation makes a similar suggestion in a paper about communications device, titled "Comic Chat" (COMPUTER GRAPHICS Proceedings, SIGGRAPH Annual Conference Series, 1996). In the paper, Microsoft Corporation suggests not only image-controlling character strings consisting of special signs like ":-)", but also control character strings which are a word or words found in ordinary sentences: for example, typing in a sentence which contains the word "hello" results in a display of a hand-waving image. Similarly, Tokukaihei 11-242751 (Japanese Laid-open Patent Application 11-242751/1999, published on September 7. 1999) discloses a text-to-speech device which reads out the text while displaying animation controlled by including a specific word or words in a sentence.

As with the display device disclosed in Tokukaihei 9-81353, entering a special control character string, however, entails difficulties in inputting various expressions quickly.

To put it more specifically, the smiling face may come in a variety of different forms, including a beaming smile and sneer. These variations cannot be expressed using ":-)" alone. Use of another character string ":-P" does not push the restriction far enough. Besides, in more expressible varieties the smiling face comes, the more control character strings the user has to handle by memorizing all these control character strings and correctly telling each one from the others, which is increasingly difficult.

Tokukaihei 9-81353 describes a method of specifying to display an intermediate facial expression between ":-)" and ":-<" by inserting a transformation instructing parameter between the two smileys like in ":-)0.5 :-<0.8". However, many users have trouble translating a transformation instructing parameter to an actual facial expression and can learn the input method only by trial and error approaches.

Besides, the display device can offer a limited range of actions and often falls short of meeting participants' expectations for surprises and varieties: participants are quick to get bored with it. The same problems are found with those devices which uses a specific word(s) in a sentence as a keyword; they present only one facial expression to a specific word, incapable of offering the user control over any more options.

The present invention has been conceived in view of the above problems has an objective to realize an expression data control system capable of quickly and correctly controlling various expressions, including small differences between the expressions.

### Disclosure of the Invention

An expression data control system in accordance with the present invention, in order to achieve the aforementioned objective, includes: a control data generating unit generation control data representative of actions/conditions of animation as expression data; and an expression data control unit controlling the expression data based on the control data, and is characterized in that it further includes an input unit enabling an input using a combination of icons representative of actions/conditions of the expression data, wherein the control data generating unit generates the control data based on a selected one of the icons.

With the configuration, the input unit enables the input of control data using a combination of icons. Under these circumstances, unlike when inputting control character string, the icons enable the user to intuitively understand the respective actions/conditions. Further, increasing the kinds of the icons does not add to the work required in inputting, as compared to inputting control character strings. Moreover, since both animation and icons are expressed as images, they are easily identifiable for respective differences between different pieces of animation controlled by the actions/conditions even when the differences are subtle. As a result, an expression data control system is realized which enables quick input of various actions/conditions.

It is preferred if besides the configuration, the input unit enables an input using a mixture of an icon and text, and the expression data control unit displays or reads out the text input positioned immediately before or after an icon in synchronism with animation represented by the icon.

According to the configuration, the animation is in synchronism with the text despite no additional inputs compared to a case where the expression data control unit only inputs what are absolutely necessary to display the text and the animation, that is, inputs the icon and the text. Further, the icon and the text which are in synchronism with each other are input so as to be successively positioned, enabling the user to understand their relationship. As a result, the animation and the text can be more easily input and more naturally controlled.

As a method of synchronization, the expression data control unit may adjust the duration of the animation represented by the icon in accordance with the length of the text or the time required to read out the text. The duration of the animation is specified by adjusting, for example, the presentation times of frames or the number of frames generated by interpolating key frames.

With the configuration, the duration of the animation is adjusted in accordance with the duration of the text or the time required for the voice output. There is thus no need to instruct the duration of the animation; the animation and the text can be more easily input and more naturally controlled.

As a method of synchronization, the expression data control unit may adjust the number of times the animation represented by the icon is reproduced in accordance with the length of the text or the time required to read out the text.

With the configuration, the number of times the animation is reproduced is adjusted in accordance with the length of the text or the time required to read out the text. Therefore, there is no particular need to instruct how many times the animation should be reproduced; the animation and the text can be more easily input and more naturally controlled.

An expression data control device in accordance with the present invention, in order to achieve the aforementioned objective, includes a control data generating unit generating control data representative of actions/conditions of animation as expression data, and is characterized in that it further includes an input unit enabling an input using a combination of icons representative of actions/conditions of the expression data, wherein the control data generating unit generates the control data based on a selected one of the icons.

With the configuration, the input unit also enables the input of control data using a combination of icons and similarly to the foregoing expression data control system, enables quick input of various actions/conditions.

It is preferred if in the expression data control device of the configuration, the icon is displayed as a thumbnail image drawn by scaling down a still or animated image making up part of the animation corresponding to the icon.

With the configuration, the icon is displayed as an image drawn by scaling down part of the animation, enabling the user to grasp differences between pieces of animation by the image even when the differences are subtle and difficult to translate to a character or the like. As a result, more actions/conditions with subtle differences can be input quickly.

The expression data control device of any of the foregoing configurations preferably further include a resource memory unit adding or substituting resource data for reproducing animation of controllable actions/conditions and storing the resource data and an icon adding unit adding an icon in accordance with the resource data.

According to the configuration, the resource data can be changed, enabling addition and change of animation of controllable actions/conditions. As a result, the animation can be controlled in a variety of ways compared to a case where controllable actions/controls are predetermined. Further, icons can be added in accordance with the resource data; even if the resource data is changed, actions/conditions can be quickly input with no trouble.

The expression data control device of the configuration may further include a data transmission unit transmitting the control data through a communications path to an expression data control unit controlling the expression data based on the control data and a resource feeding unit feeding the resource data stored in the resource memory unit to the expression data control unit before the generation and transmission of the control data is repeated.

With the configuration, the expression data control unit receives the resource data from the resource feeding unit before the transmission of the control data is repeated, thereby reducing the data amounts in the transmission of the control data and enabling quickly responses compared to a case where data representative of animation itself is transmitted for every transmission of control data. Further, the expression data control unit does not know the contents of the resource data until the resource data is received, enabling reproduction unexpected animation. As a result, an expression data control device is realized which quickly transmits various control data.

Another expression data control system in accordance with the present invention, in order to achieve the aforementioned objective, includes a control data generating unit generating control data representative of actions/conditions of expression data and an expression data control unit controlling the expression data based on the control data received through a communications path, and is characterized in that it further includes an input unit enabling an input using a combination of icons representative of the actions/conditions of the expression data and that the control data generating unit generates the control data based on a selected one of the icons and includes a resource memory unit adding or substituting resource data for reproducing the expression data having controllable actions/conditions and storing the resource data and a resource feeding unit feeding the resource data stored in the resource memory unit to the expression data control unit before the generation and transmission of the control data is repeated. The expression data is not limited to animation; alternatively, the expression data may be sound or text as examples, so long as it is of the type that is sequentially output.

With the configuration, the input unit enables an input of control data using a combination of icons. Further, before the transmission of the control data is repeated, the resource data is received from the resource feeding unit. Therefore, similarly to the foregoing expression data control system and expression data control device, control data representative of various actions/conditions can be quickly input/transmitted.

Another expression data control system in accordance with the present invention, in order to achieve the aforementioned objective, includes a control data generating unit generating control data instructing an expression method of text as expression data and an expression data control unit controlling the expression data based on the control data, and is characterized in that it further includes an input unit enabling an input using icons representative of a display method of the text in a mixture with the text and that the control data generating unit generates the control data based on a selected one of the icons; and the expression data control unit changes the display method of the text input positioned immediately before or after an icon in accordance with the selected icon.

According to the configuration, the input unit enables an input of control data using a combination of icons and similarly to the foregoing expression data control system, enables the user to intuitively understand the respective display methods. Further, increasing the kinds of the icons does not add to the work required in inputting, as compared to inputting control character strings. As a result, an expression data control system is realized which enables intuitive and quick input of text display methods.

It is preferred if in any of the foregoing expression data control systems, the input unit displays a combination of selected icons.

According to the configuration, a combination of icons is displayed, enabling the user to confirm and sufficiently consider input results. In many cases, the display of a combination of icons, which requires less computation than the control of expression data, can be handled suitably even by an input unit with a low processing power. As mentioned in the foregoing, results (actions/conditions) of control of expression data can be intuitively understood from a combination of icons.

Further, it is preferred if in any of the foregoing expression data control systems, the expression data control system is a chat system including terminal devices each including both an expression data control unit and a control data generating unit, wherein the terminal devices are capable of sending animation with speech text as the expression data to one another.

Under these circumstances, the chat system is a bi-directional communication system and required to allowing for quick input of various actions/conditions. Therefore, constituting a chat system from any of the foregoing expression data control systems is very effective.

Besides, a storage medium in accordance with the present invention stores an expression data control program generating control data representative of actions/conditions of animation as expression data, and is characterized in that, in order to achieve the aforementioned objective, it stores a program causing a computer to operate as an input unit enabling an input using a combination of icons representative of the actions/conditions of the expression data and a control data generating unit generating the control data based on a selected one of the icons.

When a computer reads out the program for execution, the foregoing expression data control device is realized. Therefore, various actions/conditions can be quickly input.

For a fuller understanding of the nature and advantages of the invention, reference should be made to the ensuing detailed description taken in conjunction with the accompanying drawings.

### Brief Description of Drawings

Figure 1, showing an embodiment of the present invention, is an explanatory drawing depicting a display on a terminal.
Figure 2 is a network diagram depicting connections between terminals.
Figure 3 is a block diagram depicting a configuration of major components of the terminal.
Figure 4 is a flow chart depicting operations of the terminal.
Figure 5 is an explanatory drawing depicting animation resources for the character representing the user stored on the terminal.
Figure 6 is an explanatory drawing depicting an icon data table stored on the terminal.
Figure 7 is an explanatory drawing depicting animation resources for the character representing the other party stored on the terminal.
Figure 8 is an explanatory drawing depicting control data transmitted from the above terminal to another party's terminal.
Figure 9 is an explanatory drawing depicting a data structure of the animation resource in detail.
Figure 10 is an explanatory drawing depicting a data structure of the icon data table in detail.
Figure 11 is an explanatory drawing depicting contents of an input buffer memory unit provided in the terminal.
Figure 12 is an explanatory drawing depicting the history of control data on the terminal.
Figure 13 is an explanatory drawing depicting a logical structure of the control data.
Figure 14 is a flow chart depicting operations of the terminal in detail.
Figure 15 is a flow chart depicting operations of the terminal in more detail, particularly reproduction of animation.
Figure 16 is an explanatory drawing depicting, as an example, another configuration of the animation resource.
Figure 17 is a block diagram depicting a configuration major hardware components constituting the terminal.
Figure 18 is a perspective view depicting, as an example, a configuration of the hardware.

### Best Modes of the Invention

The following will describe the present invention in more detail by way of embodiments and comparative examples, which are by no means intended to limit the present invention.

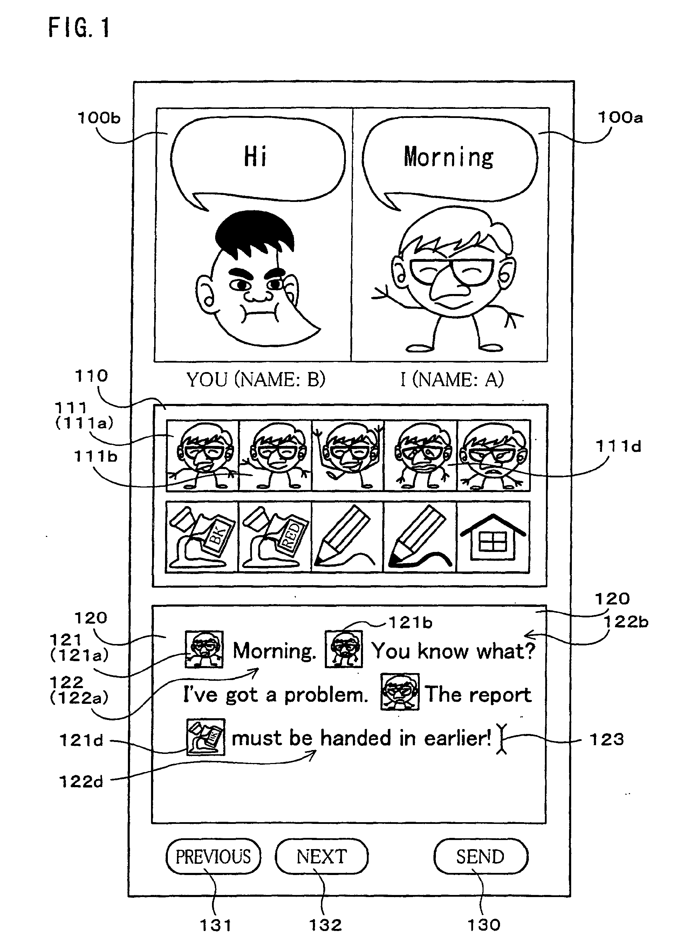

An embodiment of the present invention is now described in reference to Figure 1 to Figure 18. A system of the present embodiment is one which controls animation and text as expression data and suitably used as a chat system which enables users to communicated with each other using text-assisted animation, for example.

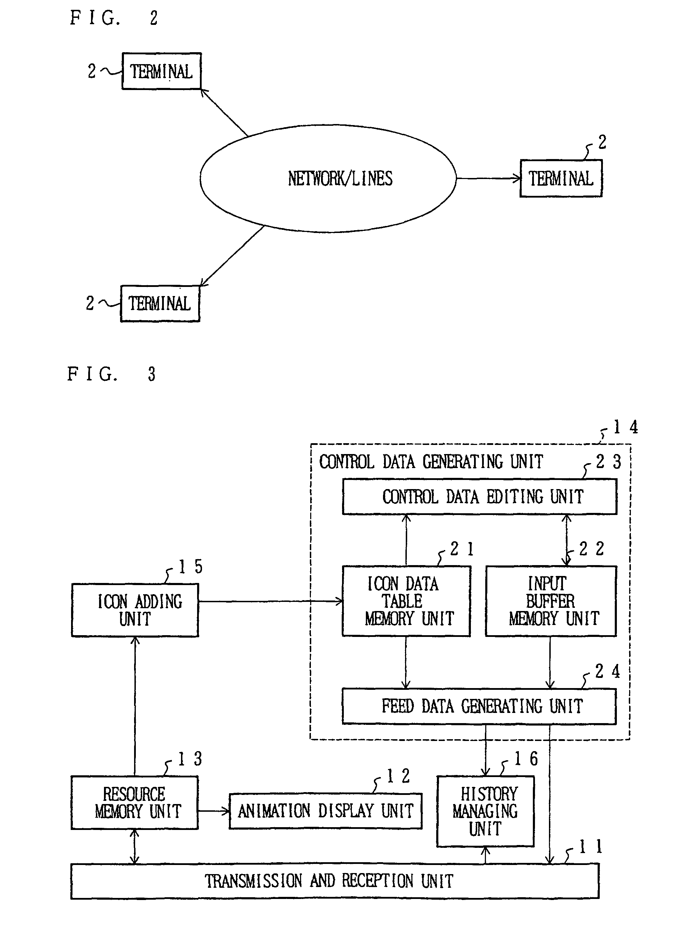

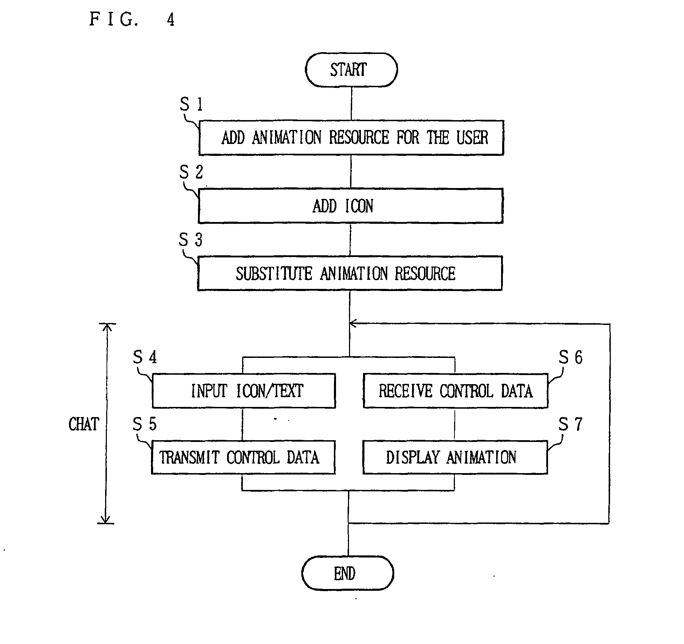

As shown in Figure 2, the chat system (expression data control system) 1 of the present embodiment includes terminals 2 connected with one another via a radio or wire communications path. Referring to Figure 3, each terminal (expression data control device) 2 is made up of a transmission and reception unit (data transmission unit, resource feeding unit) 11 for communicating with another party's terminal 2; an animation display unit (expression data control unit) 12 displaying animated characters representing both parties involved in animation display areas 100a and 100b respectively as in Figure 1; a resource memory unit 13 for storing animation display resources (animation resources); a control data generating unit 14 for combining an icon and text by, for example, displaying an icon palette 110 and a control input area 120 as in Figure 1, so as to generate control data for the character representing the user; and an icon adding unit 15 for adding an icon 111 to the icon palette 110. The terminals 2 may communicate with each other either directly or connected via switching equipment or a network server.

The terminal 2 causes the other party's terminal 2 to display a character representing the user and controls actions/conditions of the user-representing character displayed as text-assisted animation on the other party's terminal 2 by feeding control data to the other party's terminal 2. This helps the user convey nuances to the other party relatively easily when compared to conventional, text-only chat systems.

The control data generating unit 14 of the present embodiment includes an icon data table memory unit 21 for storing an icon data table on which the display of icons 111 in the icon palette 110 is based; an input buffer memory unit 22 for storing control data displayed on the control input area 120; a control data editing unit (input unit) 23 for editing control data stored in the input buffer memory unit 22 according to, for example, a user's character string input or selection of an icon 111, so as to update the display in the control input area 120; and a feed data generating unit (expression data generating unit) 24 for generate data (control data) fed to the other party's terminal 2 according to results of the editing. The user inputs text as shown in the control input area 120 in Figure 1 and selects one of icons; this is all the user has to do to generate control data for a display of an animated character which speaks and acts as he/she wants it to, in such a manner that he/she wants.

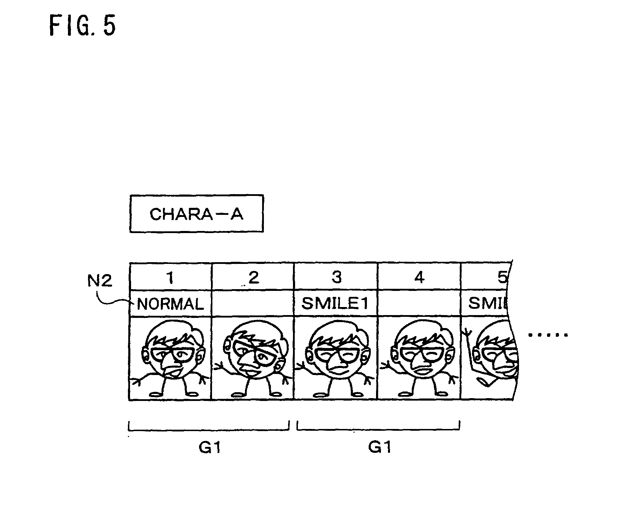

In the configuration, referring to step 1 (hereinafter, referred simply as S1) in Figure 4, prior to a chat, the terminal 2 prepares data representing available actions/conditions of the animated character representing the user during the chat as animation resources for the character representing the user. The animation resources of the present embodiment contain sets, G1, of frames making up animation for each action/condition as shown in Figure 5, for example. Each set, G1, of frames has a label N2 by means of which an action or condition is identified.

The data may be generated by, for example, drawing multiple still images from combinations of lines, polygons, ellipses, text, and/or other patterns according to user's inputs and sequencing them before being stored in the resource memory unit 13. Specifications may be made regarding the coloring of the graphical patterns. Favorite animation resources may be downloaded via the transmission and reception unit 11 from, for example, a server distributing animation resources before being stored in the resource memory unit 13.

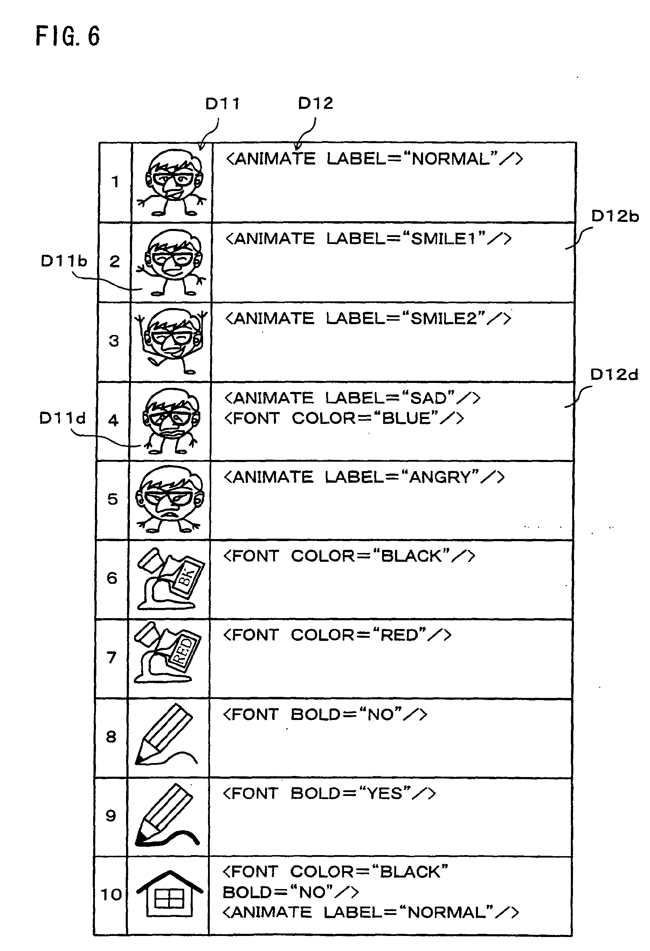

In S2, the icon data table memory unit 21 stores an icon data table suited to the animation resources of the character representing the user. As shown in Figure 6, the icon data table of the present embodiment contains combinations (records) of a set of icon image data D11 representing the image of an icon 111 and a set of data D12 representing control data fed when that icon 111 is selected, different combinations for different icons 111, for example.

If the icon 111 represents specific animation or sound, its data D12 includes a command to reproduce the animation or sound; if the icon 111 represents a change in color or another expression of text, the data D12 includes a command to change that setting. For example, the icon 111b shown in Figure 1 represents benign animation used, for example, for a greeting and has a character string "<ANIMATE LABEL="SMILE1"/>" embedded as a command for reproduction of the animation, for example, as in Data D12b in Figure 6. Each icon 111 may embed multiple commands: for example, data D12d embeds a command to reproduce animation and another to change a setting of text.

The icon image data D11 may be generated by the icon adding unit 15 extracting animated images or still images constituting a part of the animation from the sets, G1, of frames of the animation resources in the resource memory unit 13, and the character strings D12 may be generated by converting the labels N2. Alternatively, the icon image data D11 and character strings D12 may be downloaded together with the animation resources from the server. Instead of (besides) extracting the labels N2, the icon adding unit 15 is capable of adding (changing) data D12 according to a command from the user.

When the icon adding unit 15 generates based on animation resources, still/animated images from which the icon image data D11 is produced may be automatically selected by the icon adding unit 15 based on, for example, a frame's position relative to the whole animation and alterations between frames or selected by the user from options offered, for example. In either case, when the icon 111 represents animation, the icon image data D11 is preferably generated from still/animated images which include the unique features of the animation.

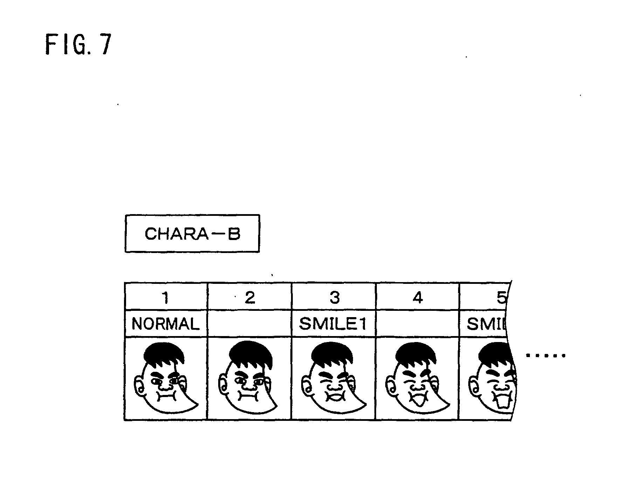

As an animation resource and an icon are added in S1, S2 in Figure 4, the transmission and reception unit 11 in the terminals 2 communicates with each other in S3 to exchange animation resources which will be used during the chat in S4 and subsequent steps. The resource memory unit 13 stores not only the animation resources for the character representing the user shown in Figure 5, but also those for the character representing the other party shown in Figure 7. Alternatively, if the animation resources for the characters representing the user and the other party can be stored, the terminals 2 may exchange only the information, such as identification number, which specifies animation resources, without exchanging the animation resources as such, and receive animation resources from, for example, the server other than the terminals 2.

As the terminals 2 stores the animation resources for the characters representing the user and the other party, a chat between the terminals 2 is started in S4 and subsequent steps as follows. During the chat, in the terminal 2, the control data editing unit 23 in the control data generating unit 14 displays the icon palette 110 and the control input area 120 shown in Figure 1 in S4, so as to encourage to input an action/control or speech text of the character representing the user using a combination of an icon 111 and text.

The control data 120 is an area where a mixture of an icon 121 and text 122 are input; a character is input at a position indicated by the input cursor 123 using a keyboard. The icons 121 are the icons 111 which have been selected from those displayed on the icon palette 110 by, for example, specifying (pointing) with a mouse and performing an input operation (clicking) and input one by one at the position of the input cursor 123.

As an icon or characters are input, the control data editing unit 23 changes the contents of the input buffer memory unit 22 according to the input, so as to update the display in the control input area 120. As a result, the data based on which the character representing the user is controlled can be input as a combination of a peacefully smiling icon 121a, "Morning" text 121a, a sad-looking icon 121b, and "You know what? I've got a problem" text 122b so that the character greets smilingly saying "Morning" then puts on a rather sad look and says "You know what? I've got a problem." Control data can be thus input intuitively and swiftly even when expressions carry various, subtle nuances.

Alternatively, the icon 111 does not have to represent animation and may represent sound. Further, the icon 111 may represent a change in display settings of the text 122d, as with the icon 121d. In the example illustrated in Figure 1, the icon 121d, showing spilling black ink, represents a command to display the part of the text 122d subsequent to the icon in black.

Further, as shown in Figure 1, in the control input area 120, a mixture of the icon 121a representing the actions/conditions of the character representing the user and the text 122a representing the speech text of the character representing the user is displayed according to inputs from the user. This enables the user to confirm the combination of the icon 121, text 122, etc. in the control input area 120 before transmission of control data. As a result, the user can sufficiently consider the contents of control before transmission. Under these circumstances, in many cases, an icon combination display, which requires less computation than an animation display/control, can be handled suitably even by a terminal 2 with a low processing power. The control data editing unit 23 is capable of editing results of inputs made in the control input area 120 and allows for editing/adjustment according to results of pre-transmission consideration before transmission.

Moreover, the animation display unit 12 of the present embodiment is displaying animation specified by the input to the control input area 120 in the animation display area 100a shown in Figure 1 while referring to the animation resources for the character representing the user stored in the resource memory unit 13. As a result, the user of the terminal 2 can confirm the animation for the character representing the user displayed at the other party's terminal 2 more accuaretely than only by watching the display in the control input area 120.

As the actions/conditions; the speech text, etc. of the character representing the user are input as a combination of the icon 121, the text 122, etc. in S4 above, the feed data generating unit 24 of the terminal 2 in S5 converts input results to control data and transmits to another party's terminal 2 via the transmission and reception unit 11 according to an instruction from the user, for example, a push of a SEND button 130 shown in Figure 1. In the following, the control data transmitted to another party in a single transmission will be regarded as forming one message. A pushing action is, for example, a pointing and clicking action using a mouse.

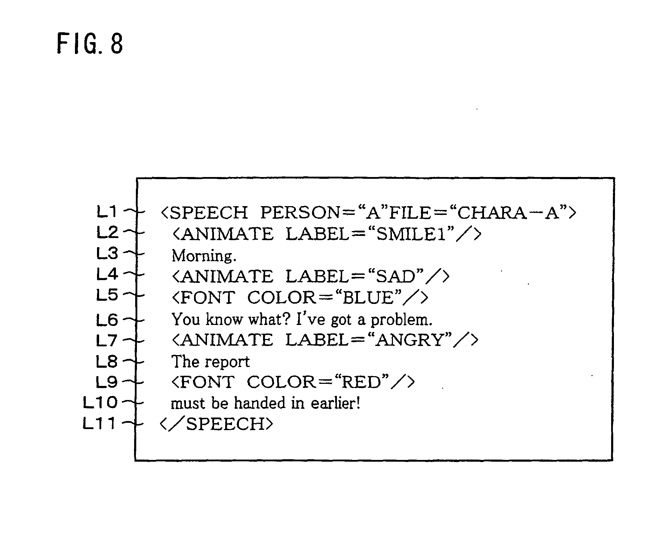

Under these circumstances, in the present embodiment, in S3 above, the animation expressing the actions/conditions available to the character representing the user during a chat is sent in advance to the other party's terminal 2 as animation resources; the animation display unit 12 of the other party's terminal 2 in later detailed S7 reproduces the animation specified by the control data in reference to the animation resource forwarded in advance. As a result, in S5, in the middle of a chat, as shown in Figure 8, information (tag L1, detailed later) for specifying an animation resource and a combination of animation, text, etc. (tag L2, text L3, etc., detailed later) are fed as control data; nothing more needs to be fed. The content of the frames constituting the animation does not need to be fed. Therefore, the amount of data transmitted between terminals 2 can be greatly reduced compared with the transmission of frame contents for every message. As a result, a swift response becomes possible in conjunction with swift inputs owing to a combination of the icon 111 and text, and the users of the terminals 2 can communicate with each other in real time.

Meanwhile, as control data is received from another party's terminal 2 in S6, the animation display unit 12 in S7 reproduces the animation represented by the control data in the animation display area 100b shown in Figure 1 while referring to the animation resources for the other party in the resource memory unit 13. To display the animation in synch with the speech text, the animation display unit 12 changes the presentation time or the number of presentations of the animation or otherwise adjusts in accordance with the length of the speech text. This helps the animation more visually appealing. Under these circumstances, if the animation represented by the icon is cut short, synchronizing becomes more accurate, but the number of inputs of the icon may increase and the animation represented by each icon becomes less identifiable. A balance between the two is specified according to a purpose.

Under these circumstances, the animation display unit 12 displays the animation based on the control data from the other party's terminal 2 in the animation display area 100b and the animation based on the control data generated the user in the animation display area 100a. As a result, animation is displayed sequentially at the user's and the other party's terminals 2 as if the characters displayed respectively to represent the other party and the user were talking to each other. Note that at the other party's terminal 2 the relationship of the user and the other party is reversed; the characters representing them in the animation display areas 100a and 100b are reversed accordingly, and icons 111 representing the character of the other party are displayed in the icon palette 110. Figure 1 demonstrates as an example two animation display areas 100 for communication between two terminals 2; alternatively, in cases where three or more parties are involved in communication, the animation display unit 12 may display animation display areas 100 representing respective terminals 2.

Steps S4-S7 are repeated for every message of each terminal 2 until the chat is over, and the users of the terminals 2 can communicate in real time while controlling the actions/conditions and the speech text for the character representing the user through combinations of an icon 121 and text 122.

Under these circumstances, when animation is used to communicate, for example, smiles may vary greatly including a beaming smile and sneer. Therefore, inputting control character strings representing actions of the character representing the user in a mix with text representing speech text as in Tokukaihei 9-81353 described above may likely require an increased number of input characters to input various expressions and a limited number of expressions to reduce the number of input characters; further, the user needs to remember the associations between control character strings and expressions. Growing varieties of expressions place on the user an extremely large burden which is not alleviated using smileys, such as ":-)" and ":-P", as control character strings. Moreover, character strings express only part of complex information on facial expressions and actions and are not intuitive. Correct inputs therefore become increasingly difficult when there are more kinds of expressions or differences between expressions become more subtle.

By contrast, in the present embodiment, the terminal 2 inputs control data as a combination of the icon 121 and the text 122. Under these circumstances, since the icon 121 is an image similarly to the animation to be controlled, subtle nuances are easily expressed compared with cases where animation is specified using a character string. Further, any icon 121 can be selected from the icon palette 110 or input otherwise by a single action, unlike cases where an icon is specified using a combination of characters. Quick inputs are therefore possible even when there are various expressions used and differences between expressions are subtle.

Further, using the terminal 2, the icons 121 representing actions/conditions can be input in combinations. Control data for altering actions/conditions can be therefore easily input in a single message. As a result, quick inputs of more expressions become possible.

Besides, in the present embodiment, the animation resource for the character representing the other party is notified from the other party's terminal 2; animation that is least expected by the user of the receiving-end terminal 2 can be reproduced. As a result, more expressions become available than in cases where the terminals 2 selects one from pieces of predetermined animation for display in accordance with the control character string, that is, when expressible animation is fixed. Since each expression is selected from received animation resources at the receiving end, the terminal 2 can reproduce animation that is least expected by the user of the receiving-end terminal 2 without any problem. Further, although a growing variety of animation resources makes it increasingly difficult to express subtle differences between expressions invariably using character strings, since expressions are identified using icons at the transmitting-end as mentioned in the foregoing, the user at the transmitting end can intuitively and quickly input various expressions without any problems.

In the foregoing, the description was limited to cases where the controlled object was animation. The controlled object may vary. Use of icons eliminates the need to remember associations between control character strings and expressions and allows for intuitive and quick inputs of various expressions; the controlled object may be, for example, sounds, including voices, sound effects, and music, or text. In this case, inputting, for example, an "icon for vivid music", "Morning!", an "icon for a disappointing sound effect", and "God! I'll be late." generates control data to reproduce vivid music while displaying text "Morning!" and reproduce a disappointing sound effect while displaying text "God! I'll be late." Other controlled objects are also possible: intuitive and quick inputs are possible without losing the varieties of expressions, by forwarding in advance sound-representing resources or resources, such as fonts, representing changes in appearance of text.

Note that when the controlled object is expressed using an image such as animation as in the present embodiment, since both the icon for input use and the controlled object are expressed using an image, subtle differences between expressions can be correctly displayed on the icon 111 displayed in either the icon palette 110 or the control input area 120. Therefore, it is particularly effective if the controlled object is animation.

When animation is a controlled object, inputting other controlled objects, such as text and sounds, using icons makes it possible to use the same input method for control commands for actions/conditions of animation and commands for the other controlled objects. Therefore, when animation is a controlled object, the same command input operability is preferably shared among all the controlled objects through the use of icons.

Incidentally, when communication involves three or more parties, that is, there are more than one other party's terminal 2, if the user is nowhere near the terminal or is distracted away from messages, the other two parties may talk on leaving the user behind. Further, even when there is only one other party's terminal 2 involved, the user may sometimes want to refer back to an earlier message.

The terminal 2 of the present embodiment includes in addition to the foregoing configuration a history managing unit 16 managing the history of control data transmitted/received by the transmission and reception unit 11 as shown in Figure 3. The history managing unit 16 updates the control data (message) displayed on the animation display unit 12 shown in Figure 1 to a previous or next message, in response to a push of a PREVIOUS button 131, a NEXT button 132, or the like. For example, supposing that the messages of participants X and Y are labeled X1, Y1, X2, Y2, and Y3 in the order of time (X and Y represent the sender of the message) and that message Y3 is being currently shown, the animation display unit 12 changes the display from message Y3 to Y2, X2, Y1, and X1 as the user keeps on pushing the PREVIOUS button 131. Hence, the user of the terminal 2 can check old messages.

Alternatively, in the description so far, text was, as an example, displayed on the animation display unit 12 in conjunction with animation, sound, or another controlled object; alternatively, the text can be read out. In either case, the same effects are achieved if the animation display unit 12 is capable of calling the user's attention to the text in conjunction with animation, sound, or another controlled object. Further, Figure 1 demonstrates that text is reproduced as if the character read out the text; alternatives are available: the same effects are achieved so long as the control data commands that the text be either displayed or read out in conjunction with animation, sound, or another controlled object. Moreover, in the example shown in Figure 1, the icon 121a preceded the text 122a; alternatively, the icon 121a may be displayed following the text 122a to express the control of the same content. In either case, as long as the icon 121a representing actions/conditions of a controlled object and the text 122a displaying (reading out) in conjunction with the controlled object are closely located, the relationship between them is easily to understand and more intuitive and quick inputs become possible.

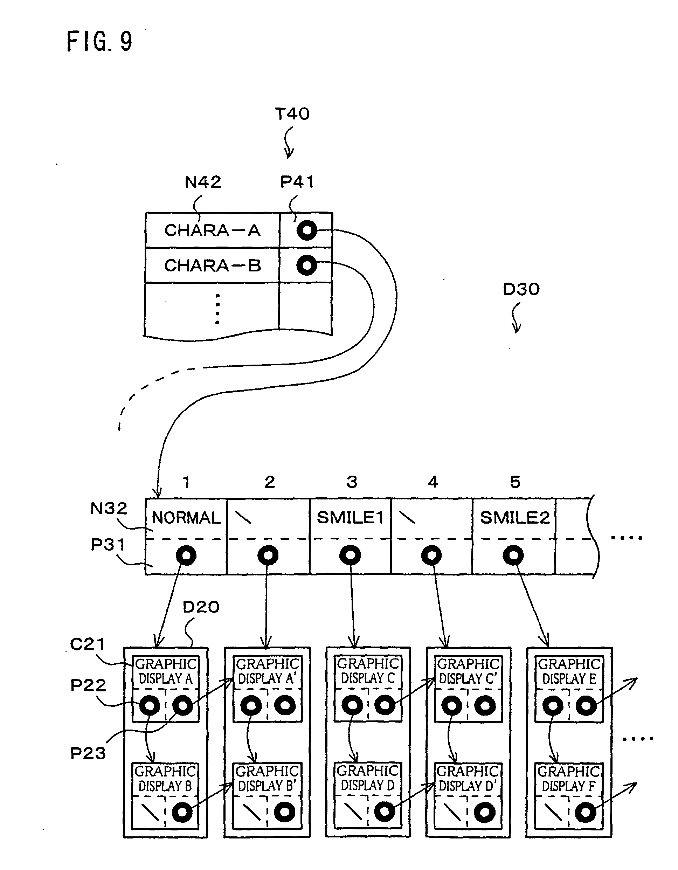

Now, a configuration example of the foregoing members is described in more detail. Referring to Figure 9, the resource memory unit 13 stores, for each animation resource, image data D20 representing frames of animation and animation frame data D30 by means of which the association between each set of image data D20 and a frame is managed. For each frame, the animation frame data D30 stores a pointer P31 for representing each set of image data D20 and a combination with label title data N32. In the first frame of animation corresponding to a certain action/condition, a label title by which the action/condition is identified is stored as label title data N32. Further, as label title data N32 for the remaining frames, void character mark is stored.

In this case, the animation display unit 12 searches the frames stored in the animation frame data D30 for a frame in which the content of the label title data N32 matches a desired label title, so as to sequentially reproduce, beginning with the frame, the image data D20 in the frame in which the label title data N32 is a void character mark; the animation corresponding to the desired label title can be displayed.

In the present embodiment, animation resources are expressed in a key frame format. The animation display unit 12 interpolates the image data D20 as key frames where necessary for reproduction of that image data D20. Specifically, in the present embodiment, each frame is expressed as a combination of graphic components, and the image data D20 includes for each graphic component in the frame, a picture-drawing command C21 for specifying the graphic component, a pointer P23 representing in a next frame a graphic component corresponding to the graphic component, and a pointer P22 representing in the same frame a next graphic component. The picture-drawing command C21 includes, for example, a command indicating the shape and position of the graphics, such as "LINE (0,0)-(0,10)-(10-10)-(0,0)", when a triangle is shown, so as to add various attributes including the width and color of a line and the color filling inside. Further, a command for a character string may be in some cases specified as the graphic's shape. Where the corresponding graphic component, next graphic component, etc. do not exist, a predetermined end mark is stored as the pointers P22, P23, etc.

In this case, to reproduce a frame, the animation display unit 12 reproduces the frame by drawing the graphic components represented by the picture-drawing commands C21 along the pointer P22. Further, the animation display unit 12, for example, interpolates a feature amount, such as position, color, and shape of the graphic component, which differs between two successive key frames (image data D20) according to picture-drawing/computation capabilities and the like of the animation display unit 12, so that the corresponding graphic component changes smoothly between the two key frames.

For example, supposing that a graphic component is located at coordinates (0,0) in a key frame and at (10,10) in a subsequent key frame and that a single frame is linearly interpolated between the two key frame, the graphic component is located in that frame at coordinates (5,5). In this example, the coordinates as a feature amount is linearly interpolated, that is, equally divided, as an example; alternatively, another method may be used for the interpolation, such as non-linear interpolation using a predetermined function, so long as an arbitrary frame can be produced from key frames.

Further, the resource memory unit 13 stores an animation resource title table T40, and the table T40 stores combinations of a pointer P41 indicating the animation frame data D30 which will be the resource itself and the resource title data N42 with respect to each animation resource stored in the resource title table T40.

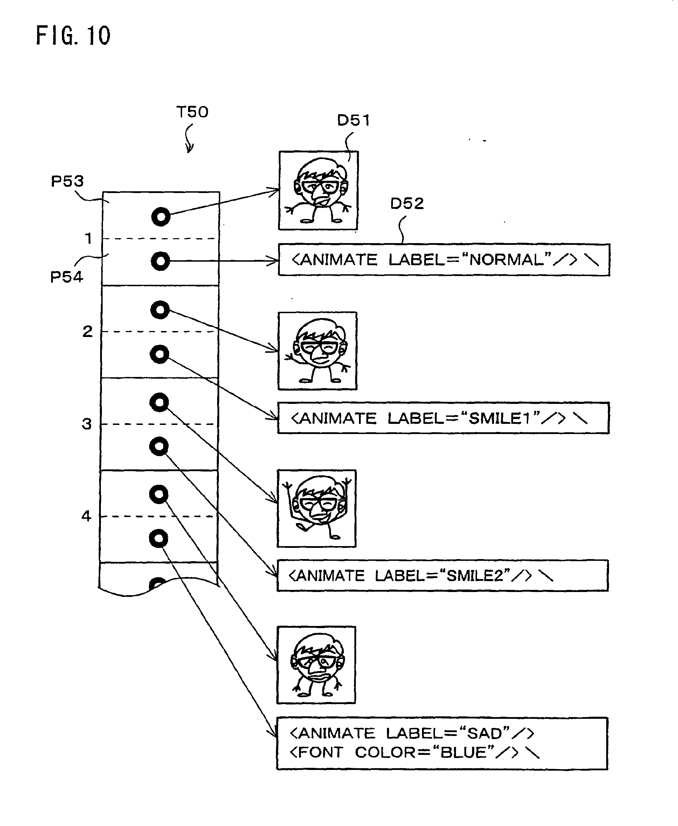

Meanwhile, the icon data table memory unit 21, for example, as shown in Figure 10, stores combinations of data (icon image data D51) representing images of the icons 111 and the control data D52 corresponding to the icons 111 as an icon data table T50 for each of the icons 111 displayed in the icon palette 110. The icon data table T50 is realized as, for example, a sequence of pointers P53 representing the icon image data D51 and pointers P54 representing the control data D52. In this example, a character end mark is attached to each set of the control data D52.

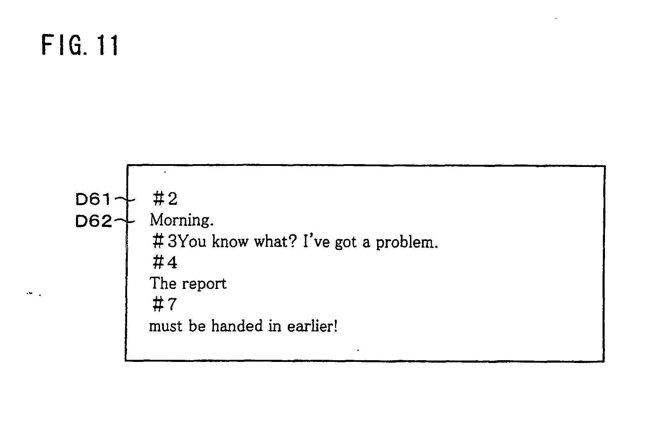

Further, in the control data editing unit 23, the input buffer memory unit 22 records icon-specifying data D61 representing the icon 121 and data D62 representing the text 122 in the order of displays in the control input area 120 as shown in Figure 11. Under these circumstances, in the figure, the icon-specifying data D61 is described as a combined character string of a specific character ("#") and ordinal numbers in the icon data table T50, and a hard return is inserted at each division between the data sets D61, D62. Further, the ordinal numbering start, for example, with the upper left icon 111 in the icon palette 110 (the icon 111 is the first icon). The icon-specifying data D61 does not have to be in the format of character strings (character codes), needless to say; alternatively, the icon-specifying data D61 may be expressed using control codes which do not correspond to any display characters so long as the icon 121 can be specified.

When the text 122, the icon 121, etc. are input, the control data editing unit 23 inserts icon-specifying data D61 or character string data D62 at positions corresponding to the input cursor 123 in the input buffer memory unit 22 according to the inputs. Further, the control data editing unit 23 displays icon image data D51 corresponding to the icon-specifying data D61 or a character string represented by the character string data D62 in the order of records in the input buffer memory unit 22. In this manner, as shown Figure 1, a mixture of the icon 121 and the text 122 can be displayed.

Although in the foregoing, input operations were described only for character strings and icons, the control data editing unit 23 is capable of changing the content of the input buffer memory unit 22 according to edit operations and updating the display in the control input area 120 when, for example, a command is issued for another edit operation such as deletion, cutting, pasting, or copying, through a key (not shown) operation, a mouse operation, etc.

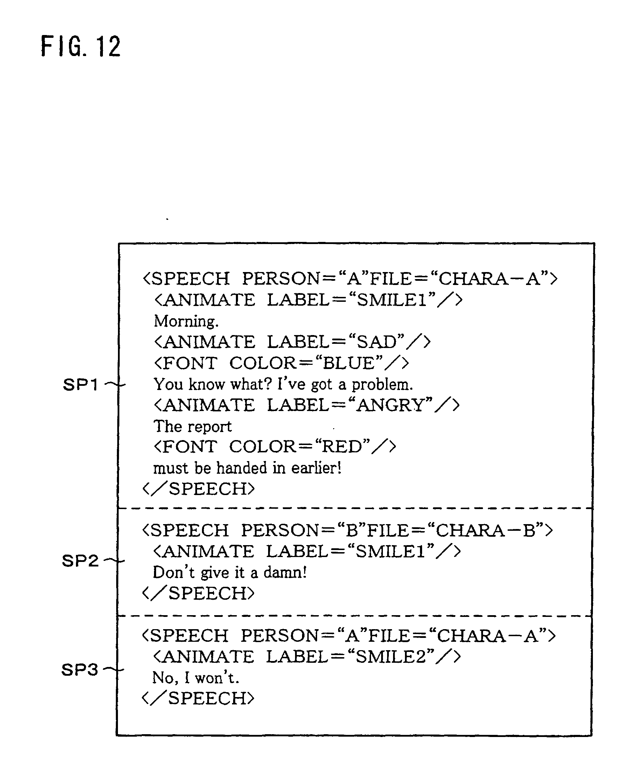

Further, upon receiving a transmission command for control data such as a push of the SEND button 130 shown in Figure 1, the feed data generating unit 24 changes the content of the input buffer memory unit 22 to control data in the format shown in Figure 8. The control data is, for example, the content of the input buffer memory unit 22 plus the information required to correctly reproduce control data at another party's terminal 2, for example animation resources: in the chat system 1 of the present embodiment, a format complying with the specifications of XML (eXtensible Mark-up Language) 1. 0 recommended by a standardization organization, World Wide Web Consortium (W3C). Further, the history managing unit 16 stores control data for each message as shown in Figure 12, for example.

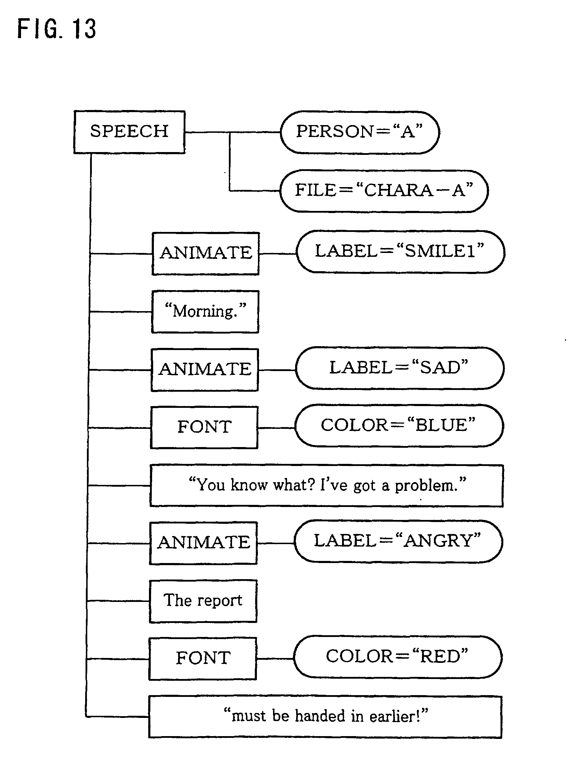

Specifically, the control data shown in Figure 8 has a logic configuration shown in Figure 13 whereby an individual set of control data is constituted by a SPEECH element which has a PERSON attribute indicating the author of the control data and a FILE attribute indicating an animation resource. Moreover, the SPEECH element may have an ANIMATE element corresponding to the icon 121 and text data corresponding to the text 122 with the order being preserved.

The control data editing unit 23 of the present embodiment displays icons of different purposes on different rows in the icon palette 110: for example, in the example of Figure 1, the top row shows icons 111 for animation control, and the bottom row shows icons 111 for a text control, recovery of the initial conditions, and other purposes. In the present embodiment, the control data editing unit 23 displays icons 111 at memory locations (in the order of addition) in the icon data table T50; the display positions of the icons 111 are specified by adjusting the memory locations in the icon data table T50. If a field showing the purposes of the icons 111 is added to the icon data table T50 for the control data editing unit 23 to control the display position of the icons 111 based on the data, data representing those purposes is stored in the field of the icon data table T50.

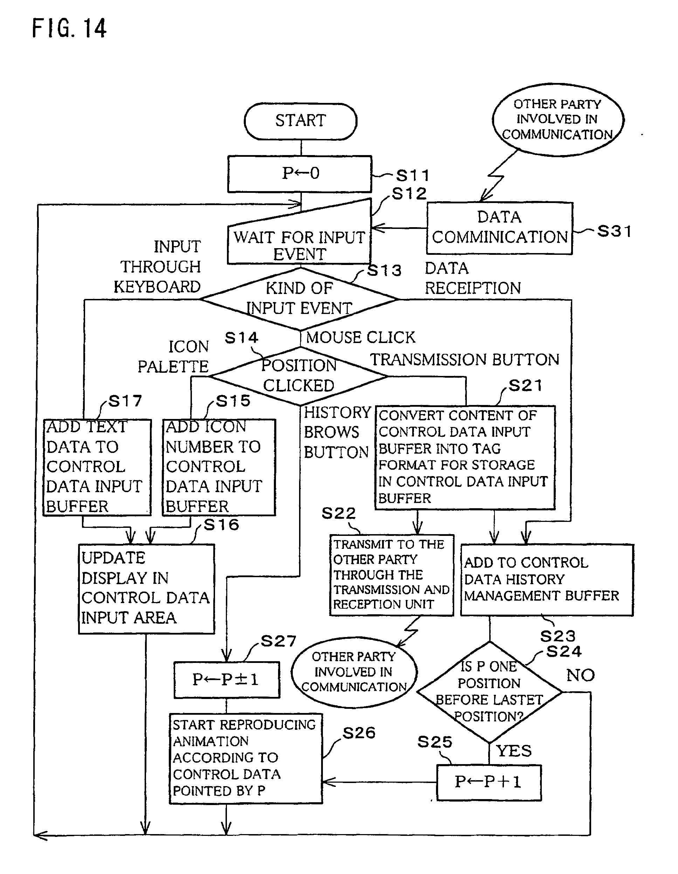

Detailed operations of the terminal 2 during a chat will be described assuming the configuration and in reference to Figure 14. The control data generating unit 14 is showing a display as shown in Figure 1 as a user interface.

In S11, a variable P showing the ordinal number of the message which should be displayed now is initialized to "0", indicating that there is no message to be displayed. In S12, the terminal 2 is waiting for an input event. The terminal 2 of the present embodiment waits for three kinds of events as an input event: character input at the keyboard, pointing to a specific position on screen and a click using a mouse, and reception of incoming data at the transmission and reception unit 11.

In response to an input event, the terminal 2 determines the kind of the input event in S13. Under these circumstances, as actions by the user, first, if a specific icon 111b in the icon palette 110 is clicked to input the icon 121 in the control input area 120 shown in Figure 1, the input event is determined to be a mouse click in S13, and the click position is interpreted as a selection of the icon palette 110 in S14. In this case, in S15, the control data editing unit 23 stores icon-specifying data D61 ("#2") representing the icon 111b at the start of the input buffer memory unit 22 as shown in Figure 11.

As the content of the input buffer memory unit 22 is changed in S15 above or S17 which will be detailed later, the control data editing unit 23 updates the display in the control input area 120 in S16. Specifically, the icon image data D51 contained in the second record of the icon data table T50 shown in Figure 10 is searched for based on the icon-specifying data D61 ("#2") in the input buffer memory unit 22 and displayed as the icon 121 in the control input area 120. As the updating of the display is completed in S16 above, step S12 and following steps are repeated.

When the character "M", a part of the character string "Morning", is typed in at the keyboard as a next user operation, S17 is executed according to the determination in S13 above, and "M" in the character string "Morning" shown in Figure 11 is stored in the input buffer memory unit 22. In this case, the display in the control input area 120 is also updated according to the content of the input buffer memory unit 22 in S16. The character "M" is subsequently displayed and the process then returns to the standby step in S12.

Having repeated S12 to S17 above to input all the icon-specifying data D61 and the character string data D62 displayed in the control input area 120, the user presses the SEND button 130 shown in Figure 1. Under these circumstances, since the pressing action of the SEND button 130 is a clicking action using a mouse, the determination of S14 is executed, and since the "SEND" button is pressed in the action, the feed data generating unit 24 changes the content of the input buffer to control data of a tag format in S21.

In other words, the control data editing unit 23 generates a single SPEECH element (everything from line L1 to line L11 in Figure 8) in a single conversion. Under these circumstances, the value of the PERSON attribute contained in the start tag (L1) in the SPEECH element (for example, "A") is a nickname of the user predetermined by the user himself/herself. Further, the value of the FILE attribute (for example, "CHARA-A") is specified from the animation resource corresponding to the icon 111 displayed in the icon palette 110.

Further, lines L2 to L10 represent the icon 121, the text 122, etc. displayed in the control input area 120: for example, "<ANIMATE LABEL="SMILE1"/>" in line L2 was found in a search of the control data D52 contained in the second records in the icon data table T50 shown in Figure 10 based on the icon-specifying data D61 (#2) in the input buffer memory unit 22 and transferred as such as. Further, the character string data D62 is, for example, used as such as character string data like in line L3. Further, lines L4 and L5 are generated by transferring the control data D52 in the icon data table T50 in the same procedure as is line L2; however, in the fourth record of the icon data table T50, as the control data D52, multiple sets (two sets in this case) of control data are stored, and multiple lines, i.e., lines L4 and L5, are generated. If sound effects are controlled in addition to/in place of animation, a element representing reproduction of music (in this case, vivid music), such as "<MUSIC TITLE="vivid.mid">", is stored in the control data D52 of the icon data table T50. Writing both an ANIMATE element and a MUSIC element in the control data D52 enables concurrent control of the animation and sound by means of a single icon.

When the control data shown in Figure 8 is generated in this manner, the transmission and reception unit 11 feeds the control data to another party's terminal 2 via a communications path in S22. Further, the control data is transferred to a control the history manage buffer (not shown) in the history managing unit 16 in S23. Further, in according with this, the history managing unit 16 updates the latest position in the history of the message: for example, specifies the latest position to "1" when a first message SP1 is transferred. Figure 12 shows a state where the control data received from the other party and the control data which the user inputs thereafter are added after the control data is transmitted, that is, a case where three messages SP1 to SP3 are included.

Moreover, in S24, the history managing unit 16 determines whether or not the value of the variable P, i.e., the ordinal number of the message which should be displayed now, is one position ahead of the latest position. Under these circumstances, initially, in S11, the variable P is set to "0". Meanwhile, the history managing unit 16 only stores the first message SP1 and the latest position is set to "1". Therefore, at this stage, the result of S24 is YES and after the variable P is increased by 1 in S25, the animation display unit 12 reproduces the control data represented by the variable P, that is, animation based on the first message SP1 in S26.

Under these circumstances, as mentioned in the foregoing, when the PREVIOUS button 131, the NEXT button 132, or the like in Figure 1 is pressed, as a result of judgement in S13, S14, the value of the variable P is increased or decreased in accordance with an operation in S27, and control data represented by the variable P is reproduced similarly to S26. For example, when the PREVIOUS button 131 is pressed, the variable P is decreased by 1 unless the variable P is 0 and the PREVIOUS option is not available. When the NEXT button 132, the variable P is increased by 1 unless the variable P is in the latest position and the NEXT option is not available. In this manner, as shown in Figure 12, among the sets of control data (SPEECH element) stored in the history managing unit 16, the SPEECH element corresponding to the variable P moves forward or backward and the corresponding SPEECH element is displayed in S26 described above.

Note that if a new SPEECH element is added in S23 with the variable P not indicating the latest position, for example, if the SEND button 130 is pressed, the result of judgement in S24 is NO, and the latest animation is displayed. In this manner, the interruption display of a new message is prevented during the reproduction of an old message, preventing conversation from being interrupted during the reproduction of an old message. Even during the reproduction of an old message, the user can redisplay the latest animation display by pressing the NEXT button 132.

Meanwhile, when the transmission and reception unit 11 receives control data from another party's terminal 2, a data reception event occurs in S31, which is followed by the execution of aforementioned S12, S13 and then of S23 and subsequent steps to display animation and text.

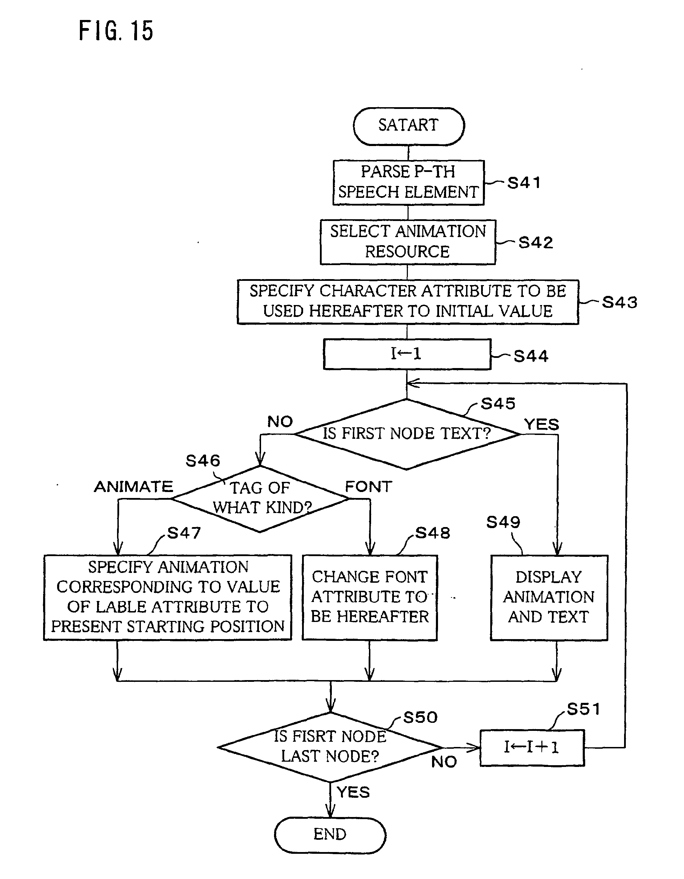

Now, the following will describe processing in S26 in more detail in reference to Figure 15. In S41, the animation display unit 12 parses the SPEECH element corresponding to the variable P. Parsing is analysis of a SPEECH element or another target data to be processed and reconfiguration of the data into a data format for ease of subsequent processing. Parsing the first message SP1 shown in Figure 12 results in parsing into the data format shown in Figure 13. Figure 13 shows a node enclosed in a quadrangle with the SPEECH element is parsed in the top node. Further, the SPEECH element has attributes including a PERSON attribute and a FILE attribute and has sub-nodes including an ANIMATE element, a FONT element, and text data. This example demonstrates a typical XML parse processing and is executable using a computer program (XML parser) made publicly available or distributed by, for example, XML-related organizations.

Moreover, in S42, the animation display unit 12 selects an animation resource of the same name from the animation resources stored in the resource memory unit 13 in advance using the FILE attribute value ("CHARA-A") among the results of the parsing in S41, as a preparation for reproduction. In S43, the animation display unit 12 sets the character attribute to be used in subsequent steps to the initial value (for example, the character color to black, the thickness to thin) and the variable I representing the ordinal number of the node to be processed to the initial value "1" in S44.

Thereafter, the processing of S45 and subsequent steps are repeated until there is no more object to be processed. That is, in S45, it is determined whether or not the I-th node is text data. Under these circumstances, since the first sub-node in Figure 13 is an ANIMATE element and not text data, it is determined in S46 of which kind the tag is. Moreover, since the tag is ANIMATE, S47 is executed, and as to the animation display unit 12, the first frame of the set, G1, of frames having the same label as the attribute's value among the animation corresponding to the value of the LABEL attribute (in this case, "SIMLE1") of the ANIMATE element, that is, the animation resource selected earlier in S42, is specified as the starting frame of the animation. Moreover, when the node represented by the variable I is not the last mode (NO in S50), the variable I is increased by 1 in S51, and S35 and subsequent steps are repeated with a next node as the processing target.

In the example in Figure 13, since the second node is text data, S49 is executed according to the earlier determination in S45, and the set, G1, of frames are reproduced in synchronism with the text data. Under these circumstances, since the character attribute is not changed from the initial setting in S43, animation of the character reading out the speech text with initial character attribute settings (black and thin characters) is displayed as shown in Figure 1.

The nodes are processed one after the other, and when the variable I reaches 4, since the fourth node is a FONT element, S48 is executed according to the results of the judgement in S45, S46, and the font's attribute for use thereafter is set to the value of the attribute of the node. In the fourth node in Figure 13, since the COLOR attribute's value is set to "BLUE", the animation display unit 12 changes the attribute of the characters displayed thereafter to blue. As a result, for example, the next node (text data "You know what?") is displayed in blue.

S45 through S51 are repeated until the last node. The animation display unit 12 displays animation and text in synch in the animation display areas 100a and 100b. At the last node, the judgement in S50 is YES, completing the display process for one message.

As a method of the animation display unit 12 synchronizing the animation represented by an icon and the speech text represented by a character string, adjustment of presentation time will be now described. As an example, suppose that each icon represents a key frame and the animation display unit 12 generates frames with transitional shapes by interpolating feature amounts, such as shape and color, between that key frame and a successive key frame for reproduction of smooth animation. To reproduce control data generated by inputting "Icon 1", "Morning", and "Icon 2", the animation display unit 12 controls the time it takes for the display to move from the frame represented by "Icon 1" to the frame represented by "Icon 2", according to the length of the text "Morning". Therefore, as an example, suppose that "Icon M" represents a key frame of an "M" uttering face image, "Icon O" represents a key frame of a "Or" uttering face image, and "Icon I" represents a key frame of an "Ing" uttering face image; generating control data in response to the input "Icon M" → "M" → "Icon O" → "Or" → "Icon I" → "Ing" causes the animation display unit 12 reproducing the control data to reproduce animation of a face image with the mouth uttering "M" → "Or" → "Ing", closely in synchronism with the speech text "Morning". Specifying individual pieces of animation corresponding to respective icons to be short in duration in this manner enables more detailed control of the animation and more accurate synchronism.

Further, as an example, suppose an icon represents a key frame and the number of presentations is adjusted. When "Icon Open" and "Icon Close" represent face images with an open mouth and a closed mouth respectively, generating control data by inputting "Icon Open" → "Good afternoon" → "Icon Close" causes the animation display unit 12 to reproduce animation of a face image with the mouth moving "Open" → "Closed" → "Open" → "Closed" according to the length of the text "Good afternoon". In this case, although not strictly following real movements, the mouth in the reproduced animation opens and closes substantially closely in synchronism with the speech text. Whether the presentation time or the number of presentations should be adjusted may be determined in advance so that the input-end control data generating unit 14 and the display-end animation display unit 12 carry out the same adjustment. Alternatively, for example, a switching command may be embedded in the control data. In this case, the switching between the two is preferably input using an icon, so as to agree with another input.

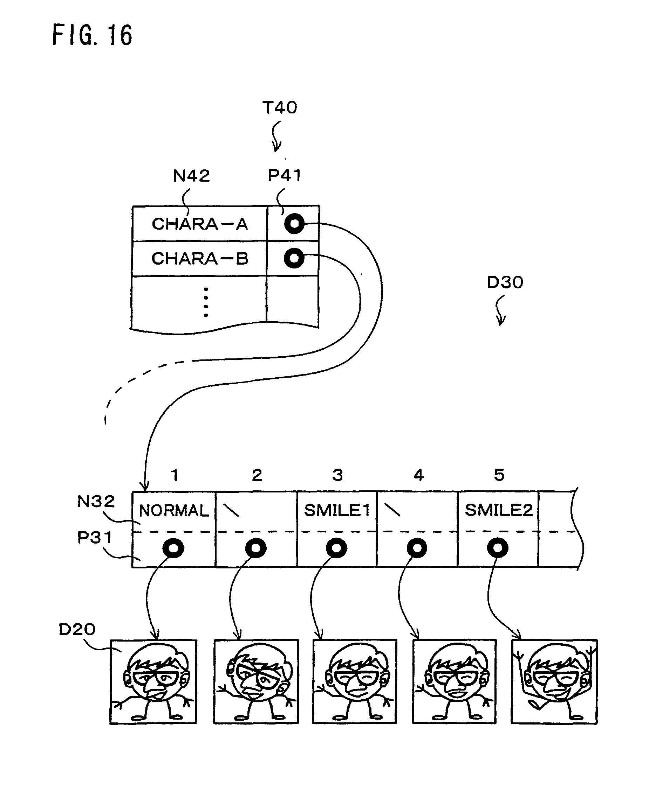

Figure 9 demonstrated an example in which the animation resource is in a key frame format; this is not the only possibility. Alternatively, for example, as shown in Figure 16, the animation resource is in a bitmap format. In this case, each set of image data D20 is stored, for example, as bitmap data with fixed horizontal and vertical dimensions. The animation display unit 12 can reproduce the frame by displaying the image data D20 represented by the pointers P32 of the frames. Note that general key frame formats like the one employed in the present embodiment do not require as much data transmission. Further, the interpolation, and thus synchronization between the text and the animation, could be easier if the association among the graphic components is stored.

Each member making up the terminal 2 may be realized by either software or hardware. In the former case, for example, computation means, such as a CPU , executes a program stored in a storage medium, such as a ROM or RAM, thereby delivering the required functions. Alternatively, the same functions can be realized by a combination of hardware implementing part of the process and computation means implementing the rest of the process and controlling the hardware by executing such programs. Moreover, the computation means may be a single entity or multiple entities connected with each other via internal bus and various communications paths to work together to execute a program.

The program is distributed for execution by the computation means. Distribution channels may vary: the program itself or data required to produce the program may be stored on a storage medium for later distribution or such program data may be transmitted via over communications lines or radio communications.

The storage medium used for the distribution of the program data is preferably removable. However, the storage medium is not necessarily removable after the distribution of the program data. Further, the storage medium may be rewriteable or non-rewriteable, volatile or nonvolatile, and of any storing method and shape, so long as the program data is stored thereon. Examples of such storage media include magnetic tape, cassette tape, and other types of tape; floppy disks, hard disks, and other type of magnetic disks; CD-ROMs, Magneto-optical disks (MO), mini disks (MD), digital video disks (DVDs), and other types of disks. Further, the storage medium may be a card, such as an IC card or an optical card, or a semiconductor memory, such as Mask ROM, EPROM, EEPROM, or flash ROM.

The program data may be instruction codes executed by the computation means to implement the whole procedures. Alternatively, if a basic program (for example, operating system or library) exists which can be fetched by a predetermined procedure and implement a part of the entirety of each process, the codes may be partly or entirely replaced with codes or pointers to instruct the computation means to fetch the basic program.

Further, the program data may be stored on the storage medium in one of many storage formats, including those in which the program data is accessible by the computation means for execution, for example, as loaded in actual memory, in which the program data is installed on a local storage medium (for example, actual memory or hard disk) permanently accessible by the computation means, but not loaded into actual memory yet, or in which the program data is yet to be installed on a local storage medium over a network or transportable storage medium. Further, The program data is not limited to compiled object codes, but may be stored as source codes or intermediate codes generated during interpretation or compilation. In either case, the same effects can be achieved regardless of the format in which the program data is stored on the storage medium, provided that the format can be converted to another format executable by the computation means by means of one or more processes decompression, decoding, interpretation, compilation, linking, or loading into actual memory.

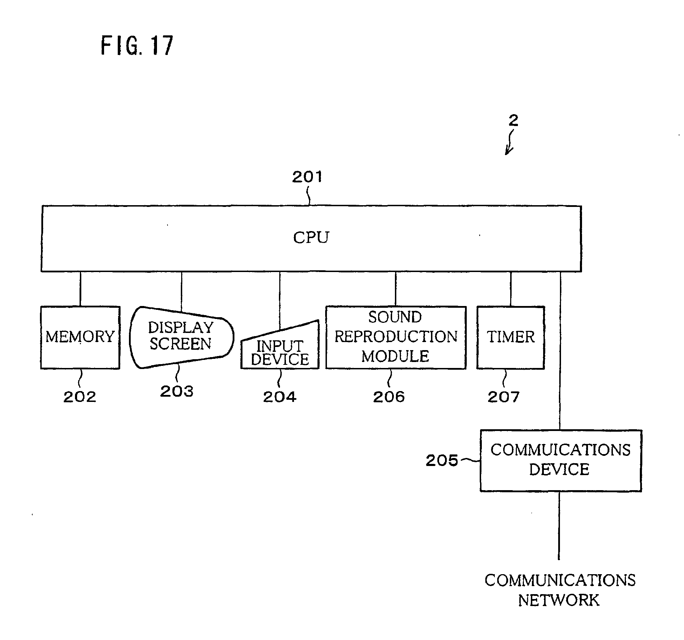

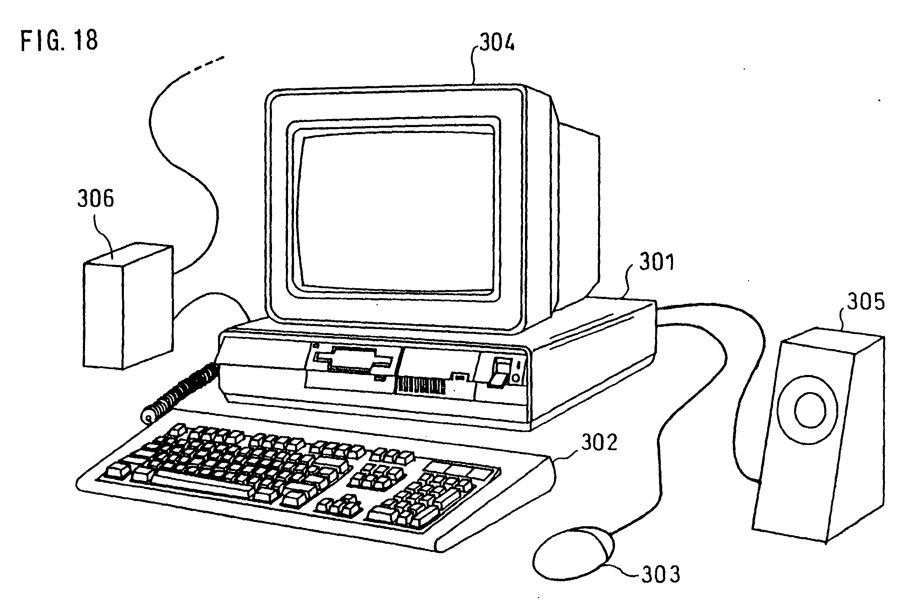

Under these circumstances, in reference to Figure 17 and Figure 18, the following will describe an example of hardware configuration. That is, the terminal 2 includes a CPU 201 delivering each of the foregoing members by executing a predetermined program, a memory 202 connected to the CPU 201, a display screen 203 connected to the CPU 201, an input device 204 connected to the CPU 201, and a communications device 205 connected to the CPU 201 and serving as the transmission and reception unit 11, as shown in Figure 17. Further, if sound is used as expression data, the configuration includes an additional member too: a sound reproduction module 206 made up primarily of a D/A converter (not shown), an analog signal amplifier, and speakers. If music is used as expression data, the sound reproduction module 206 may have a sound source device. If a synthesized voice output reading out text is used as expression data, the sound reproduction module 206 may have a voice synthesizer. A timer 207 may be added when accurate reproduction time control is required in animation reproduction, for example.

The members 201 to 207 are provided by, for example, an enclosure 301 housing a CPU 201 and memory 202, a keyboard 302 and mouse 303 as the input device 204, and a display device 304 as the display screen 203 as shown in Figure 18. Moreover, the communications device 306 corresponding to the communications device 205 in Figure 17 is, for example, a DSU, terminal adapter, modem, or any combination of the devices, and connects to an external communications network through the device. The speaker 305 is a part of the sound reproduction module 206, and the rest is housed in the enclosure 301. Alternatively, naturally, this is not the only possible device configuration. Mobile phones will do, for example.

Incidentally, in the present embodiment, a bi-directionally communicable chat system incorporating animation was taken as an example. This is however not the only possibility. The same effects can be achieved with a bi-directional communication system employing another communication method whereby, for example, one of two parties involved can send animated images, while the other can send only text and sound. Some of the effects are achieved with unidirectional communication and configurations (authoring configurations) whereby the user displays the animation he/she inputs, with no communication involved, thanks to the capabilities to swiftly input various expressions. Note that effects are especially notable with bi-directional communication systems, more swift responses are required.

The invention being thus described, it will be obvious that the same way may be varied in many ways. Such variations are not to be regarded as a departure from the spirit and scope of the invention, and all such modifications as would be obvious to one skilled in the art are intended to be included within the scope of the following claims.

### Industrial Applicability

An expression data control system in accordance with the present invention includes an input unit enabling the input of control data representative of actions/conditions of expression data using a combination of icons. Therefore, an expression data control system is realized which allows for quick input of various actions/conditions.

Another expression data control system in accordance with the present invention enables control data representative of actions/conditions of expression data to be input using a combination of icons and resource data for reproducing the expression data having the controllable actions/conditions to be transmitted before the control data is repeatedly transmitted. Therefore, an expression data control system can be realized which allows for quick input of various actions/conditions.

Another expression data control system in accordance with the present invention enables an icon representative of an expression method of text to be input in a mixture with the text as expression data and an expression data control unit to change the expression method of the text input so as to appear immediately before or after the icon according to the icon. Therefore, an expression data control system can be realized which allows for intuitive and quick input of the expression method of text.

## Claims

1. An expression data control system, being **characterized in that** the system comprises:
a control data generating unit generating control data representative of actions/conditions of animation as expression data;
an expression data control unit controlling the expression data based on the control data; and
an input unit enabling an input using a combination of icons representative of actions/conditions of the expression data,
wherein
the control data generating unit generates the control data based on a selected one of the icons.

2. The expression data control system as defined in claim 1, wherein:
the input unit enables an input using a mixture of an icon and text; and
the expression data control unit displays or reads out the text input positioned immediately before or after an icon in synchronism with animation represented by the icon.

3. The expression data control system as defined in claim 2, wherein:
the expression data control unit adjusts a duration of the animation represented by the icon in accordance with a length of the text or a time required to read out the text.

4. The expression data control system as defined in claim 3, wherein
the expression data control unit adjusts the duration of the animation by controlling respective presentation times of frames making up the animation.

5. The expression data control system as defined in claim 3, wherein
the expression data control unit generates a frame displayed between successive key frames making up the animation by interpolation based on the key frames and adjusts the duration of the animation by controlling the number of frames generated.

6. The expression data control system as defined in claim 2, wherein
the expression data control unit adjusts the number of times the animation represented by the icon is reproduced in accordance with a length of the text or a time required to read out the text.

7. The expression data control system as defined in claim 1, wherein
the input unit displays a combination of selected icons.

8. The expression data control system as defined in claim 1, used as a chat system comprising terminal devices each including the expression data control unit and the control data generating unit, wherein
the terminal devices are capable of sending animation with speech text as the expression data to one another.

9. An expression data control device, being **characterized in that** the device comprises:
a control data generating unit generating control data representative of actions/conditions of animation as expression data; and
an input unit enabling an input using a combination of icons representative of actions/conditions of the expression data,
wherein
the control data generating unit generates the control data based on a selected one of the icons.

10. The expression data control device as defined in claim 9, further comprising:
a resource memory unit adding or substituting resource data for reproducing animation of controllable actions/conditions and storing the resource data; and
an icon adding unit adding an icon in accordance with the resource data.

11. The expression data control device as defined in claim 10, further comprising:
a data transmission unit transmitting the control data through a communications path to an expression data control unit controlling the expression data based on the control data; and
a resource feeding unit feeding the resource data stored in the resource memory unit to the expression data control unit before the generation and transmission of the control data is repeated.

12. The expression data control device as defined in claim 9, wherein:
the icon is displayed as a thumbnail image drawn by scaling down a still or animated image making up part of the animation corresponding to the icon.

13. The expression data control device as defined in claim 12, further comprising:
a resource memory unit adding or substituting resource data for reproducing animation of controllable actions/conditions and storing the resource data; and
an icon adding unit adding an icon in accordance with the resource data.

14. The expression data control device as defined in claim 13, further comprising:
a data transmission unit transmitting the control data through a communications path to an expression data control unit controlling the expression data based on the control data; and
a resource feeding unit feeding the resource data stored in the resource memory unit to the expression data control unit before the generation and transmission of the control data is repeated.

15. An expression data control system, being **characterized in that** it comprises:
a control data generating unit generating control data representative of actions/conditions of expression data;
an expression data control unit controlling the expression data based on the control data received through a communications path;
an input unit enabling an input using a combination of icons representative of the actions/conditions of the expression data;
a resource memory unit adding or substituting resource data for reproducing the expression data having controllable actions/conditions and storing the resource data; and
a resource feeding unit feeding the resource data stored in the resource memory unit to the expression data control unit before the generation and transmission of the control data is repeated,
wherein
the control data generating unit generates the control data based on a selected one of the icons.

16. The expression data control system as defined in claim 15, wherein
the input unit displays a combination of selected icons.

17. The expression data control system as defined in claim 15, used as a chat system comprising terminal devices each including the expression data control unit and the control data generating unit, wherein
the terminal devices are capable of sending animation with speech text as the expression data to one another.

18. An expression data control system, being **characterized in that** it comprises:
a control data generating unit generating control data instructing an expression method of text as expression data;
an expression data control unit controlling the expression data based on the control data; and
an input unit enabling an input using icons representative of a display method of the text in a mixture with the text,
wherein:
the control data generating unit generates the control data based on a selected one of the icons; and
the expression data control unit changes the display method of the text input positioned immediately before or after an icon in accordance with the selected icon.

19. The expression data control system as defined in claim 18, wherein
the input unit displays a combination of selected icons.

20. The expression data control system as defined in claim 18, used as a chat system comprising terminal devices each including the expression data control unit and the control data generating unit, wherein
the terminal devices are capable of sending animation with speech text as the expression data to one another.

21. A storage medium storing an expression data control program generating control data representative of actions/conditions of animation as expression data, wherein
the storage medium stores a program causing a computer to operate as:
an input unit enabling an input using a combination of icons representative of the actions/conditions of the expression data; and
a control data generating unit generating the control data based on a selected one of the icons.
